# EUROPÄISCHE PATENTSCHRIFT

(11) **EP 2 964 862 B1**
(45) Veröffentlichungstag und Bekanntmachung des Hinweises auf die Patenterteilung: **12.04.2017**
(21) Anmeldenummer: 14709267.0
(22) Anmeldetag: 10.03.2014
(51) Int. Cl.: E06B 1/60, E06B 3/22

(54) **VERFAHREN ZUR BEFESTIGUNG EINES BLENDRAHMENS AN EINEM MAUERWERK MIT EINEM DÜBELKAMMERADAPTER**
METHOD FOR FIXING A FRAME TO MASONRY WITH A DOWEL CHAMBER ADAPTER
MÉTHODE DE FIXATION D'UN DORMANT SUR UN MUR AVEC UN ADAPTATEUR DE CHAMBRE À CHEVILLE

(30) Priorität: 08.03.2013 EP 13158482
(43) Veröffentlichungstag der Anmeldung: 13.01.2016
(73) Patentinhaber: profine GmbH, 53840 Troisdorf (DE)
(72) Erfinder: WEIGEL, Dennis, 76855 Annweiler am Trifels (DE)
(74) Vertreter: Wübken, Ludger
(86) Internationale Anmeldenummer: PCT/EP2014/054608
(87) Internationale Veröffentlichungsnummer: WO 2014/135708

(56) Entgegenhaltungen:
- EP-A1- 0 155 484
- DE-U1- 9 301 598
- FR-A1- 2 864 986

## Beschreibung

Die Erfindung betrifft Verfahren zur Befestigung eines Hohlkammern aufweisenden Blendrahmenprofils an einem Mauerwerk o. dgl. mit einem Dübelkammeradapter.

### Technisches Gebiet und Stand der Technik

Fenster und Türen werden in großem Umfang aus Hohlkammerprofilen aus thermoplastischem Kunststoff, insbesondere aus PVC, hergestellt. Zur Versteifung weisen die Blendrahmenprofile üblicherweise eine groß dimensionierte Hohlkammer zur Aufnahme einer Stahlverstärkung - auch Stahlkammer genannt - auf.

Einige Profilsysteme sehen für die Verschraubung des Blendrahmens im Mauerwerk auch eine gesonderte, von der Stahlkammer durch eine Wandung getrennte Dübelkammer vor. Soweit die Verschraubung ausschließlich durch diese Dübelkammer geführt wird, ist sichergestellt, dass keine Feuchtigkeit in die Stahlkammer gelangen kann. Soweit eine solche Dübelkammer nicht vorgesehen ist oder wenn aus anderen Gründen die Verschraubung des Blendrahmens durch die Stahlkammer geführt werden soll, besteht beim Befestigen des Blendrahmens im Mauerwerk die Gefahr, dass Schlagregen, der bis in den Falzbereich gelangen kann, im Bereich der Verschraubung in die Stahlkammer und von dort ggf. sogar in das Mauerwerk gelangt und zu Schäden im Mauerwerk und zur Korrosion der Stahlverstärkung führt.

Besonders problematisch ist diese Situation bei sogenannten Anschlagdichtungssystemen, und ganz besonders bei solchen Anschlagdichtungssystemen, die einen flachen oder gar horizontal verlaufenden Blendrahmenfalzbereich aufweisen. Es besteht bei solchen Systemen dann die Notwendigkeit, die Verschraubung aufwändig beispielsweise mit Silikon abzudichten.

Aus der DE 93 01 598 U1 ist ein Kunststoffrahmen mit einem aus einem Mehrkammerprofil bestehenden Rahmenholm und einer daran im Falzbereich befestigten Außenabdeckleiste bekannt, bei dem eine Verschraubung durch eine Ausnehmung in der Außenabdeckleiste in das Mauerwerk geführt wird. Auch hier besteht die Notwendigkeit, die Verschraubung aufwändig beispielsweise mit Silikon abzudichten.

Aus der FR 2 864 986 A1 ist zur Verfahren zur Befestigung eines Hohlkammern aufweisenden Blendrahmenprofils an einem Mauerwerk o. dgl. bekannt, bei dem eine Verschraubung und ein Dübel mit einer integrierten Abdeckkappe verwendet wird. Auch bei dieser Ausführungsform wird keine zuverlässige Abdichtung des Falzbereichs gegenüber den Hohlkammern des Blendrahmenprofils erreicht.

Es zeigt alle Merkmale des Oberbegriffs des Anspruchs 1.

### Aufgabe

Aufgabe der vorliegenden Erfindung ist es, eine Verschraubung eines Blendrahmens durch den Falzbereich in ein angrenzendes Mauerwerk so zu bewerkstelligen, dass auch bei Eindringen von Wasser in den Falzbereich des Blendrahmens eine sichere Abdichtung des Falzbereiches gegenüber den Hohlkammern des Blendrahmenprofils gewährleistet ist. Ein weiteres Anliegen der Erfindung ist es, die Montage eines Blendrahmens in einer Maueröffnung zu vereinfachen.

### Darstellung der Erfindung

Die Erfindung löst diese Aufgabe durch ein Verfahren nach Anspruch 1, bevorzugt in Verbindung mit einem oder mehreren der Merkmale der Unteransprüche.

Der erfindungsgemäß verwendete Dübelkammeradapter weist einen Grundkörper mit einer Unterseite, einer Oberseite und einer den Grundkörper durchdringenden Bohrung, einen vom Grundkörper beabstandet angeordneten Zapfen und ein an der Unterseite des Grundkörpers angeordnetes Mittel zur Abdichtung des Dübelkammeradapters gegenüber dem Blendrahmenprofil auf. Die Bohrung dient zur Führung einer Verschraubung durch den Blendrahmen in das Mauerwerk. Der Zapfen dient dazu, in eine den Falzbereich des Blendrahmenprofils rauminnenseitig begrenzende Glasleistenaufnahmenut eingeklemmt oder eingerastet zu werden. Hierdurch wird ein definierter Abstand der Verschraubung zur Glasleistenaufnahmenut und damit zur Innensichtkante des Blendrahmenprofils sichergestellt.

Das an der Unterseite des Grundkörpers angeordnete Mittel zur Abdichtung des Dübelkammeradapters gegenüber dem Blendrahmenprofil stellt sicher, dass Schlagregen oder andere Feuchtigkeit, die in den Falzbereich des Blendrahmens gelangt, nicht durch die Verschraubung in die Stahlkammer oder das Mauerwerk eindringen kann. Der Dübelkammeradapter ersetzt somit von seiner Funktion her gesehen eine gesonderte Dübelkammer.

Der erfindungsgemäß eingesetzte Dübelkammeradapter wird bevorzugt aus Metall im Druckgussverfahren oder alternativ aus Kunststoff im Spritzgussverfahren hergestellt. Soweit der Dübelkammeradapter aus Kunststoff im Spritzgussverfahren hergestellt wird, besteht die Abdichtung des Dübelkammeradapters gegenüber dem Blendrahmen bevorzugt aus weichelastischem Kunststoff, der nach einer besonders bevorzugten Ausführungsform der Erfindung im sogenannten Zweikomponenten-Spritzgussverfahren einstückig mit dem Grundkörper verbunden wird.

Nach einer alternativen bevorzugten Ausführungsform der Erfindung wird als Mittel zur Abdichtung des Dübelkammeradapters gegenüber dem Blendrahmenprofil ein Dichtkissen aus Schaumstoff eingesetzt. Bevorzugt handelt es sich dabei um geschlossenzelligen Schaumstoff. Diese Variante eignet sich insbesondere für Dübelkammeradapter aus Metall.

Nach einer weiteren bevorzugten Ausführungsform der Erfindung weist der erfindungsgemäße Dübelkammeradapter Mittel zum Einklemmen oder Einrasten des Zapfens in die Glasleistenaufnahmenut des Blendrahmenprofils auf. Hierbei kann es sich beispielsweise um einen angeformten kleinen Nocken, eine Nase oder eine Hinterschneidung des Zapfens handeln.

Der erfindungsgemäße Dübelkammeradapter wird nach einer bevorzugten Ausführungsform der Erfindung in einem System eingesetzt, das neben dem Dübelkammeradapter ein Blendrahmenprofil aufweist mit einem Falzbereich, einer Außenseite, einer Innenseite und einer im Bereich der Innenseite den Falzbereich begrenzenden Glasleistenaufnahmenut. Besonders vorteilhaft ist der Einsatz des erfindungsgemäßen Dübelkammeradapters bei einem Blendrahmen, bei dem der Falzbereich des Blendrahmenprofils einen ebenen, bei bestimmungsgemäßer Verwendung horizontal und damit senkrecht zur Innenseite verlaufenden Bereich aufweist, der sich von der Glasleistenaufnahmenut in Richtung zur Außenseite erstreckt, da bei derartigen Blendrahmen eine besonders hohe Gefahr besteht, dass Schlagregen im Falzbereich bis an die Innenseite der Glasleistenaufnahmenut gelangen kann. Bevorzugt handelt es sich bei dem eingesetzten System um ein Anschlagdichtungssystem.

Für die Befestigung eines Blendrahmens am Mauerwerk werden folgende Verfahrensschritte durchgeführt: Der Dübelkammeradapter wird zunächst durch klemmendes oder rastendes Einführen des Zapfens in die Glasleistenaufnahmenut im Falzbereich des Blendrahmenprofils befestigt. Anschließend wird, ggf. nach entsprechendem Vorbohren, eine Schraube durch den Dübelkammeradapter und das Blendrahmenprofil in die Wandung der Maueröffnung geschraubt, wobei der Kopf der Schraube im Dübelkammeradapter versenkt und das Mittel zur Abdichtung unter Abdichtung des Dübelkammeradapters gegenüber dem Blendrahmenprofil verpresst wird.

Nach einer bevorzugten Verfahrensweise wird vor dem Eindrehen der Schraube unter Verwendung des Dübelkammeradapters als Bohrlehre zum Vorbohren ein Loch durch das Blendrahmenprofil in die Wandung der Maueröffnung gebohrt.

### Kurze Beschreibung der Zeichnung

Die Erfindung wird nachfolgend anhand eines Ausführungsbeispiels sowie der Zeichnung näher erläutert. Es zeigen dabei:
- Fig. 1: einen Schnitt durch ein Blendrahmenprofil mit Dübelkammeradapter und Verschraubung;
- Fig. 2: eine Seitenansicht des Dübelkammeradapters;
- Fig. 3: eine Ansicht des Dübelkammeradapters von schräg oben;
- Fig. 4: eine Ansicht des Dübelkammeradapters von schräg unten;
- Fig. 5: eine Ansicht des Blendrahmenprofils mit Dübelkammeradapter und Verschraubung von schräg/innen;
- Fig. 6: den Dübelkammeradapter als zweiteilige Ausführung mit Grundkörper und Dichtkissen.

### Bester Weg zur Ausführung der Erfindung

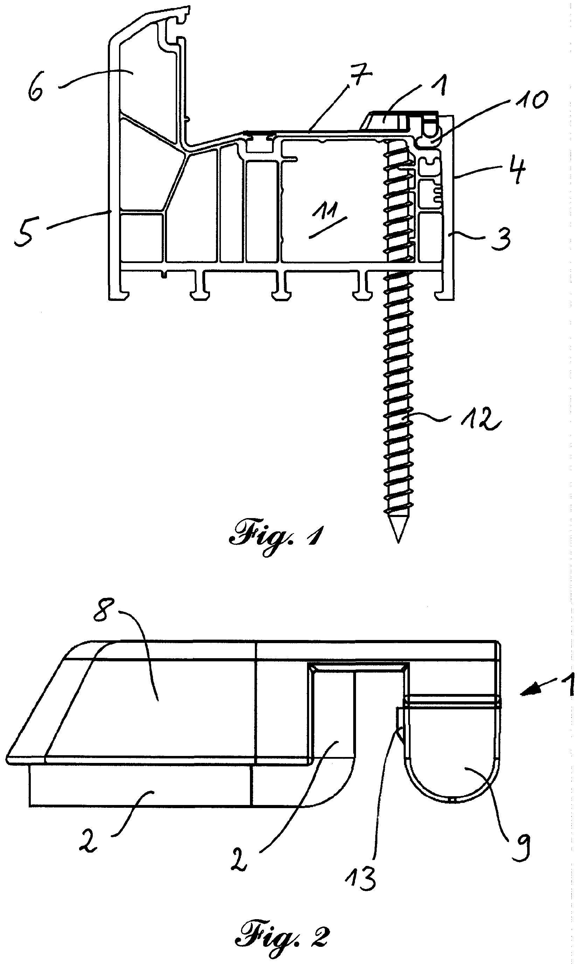

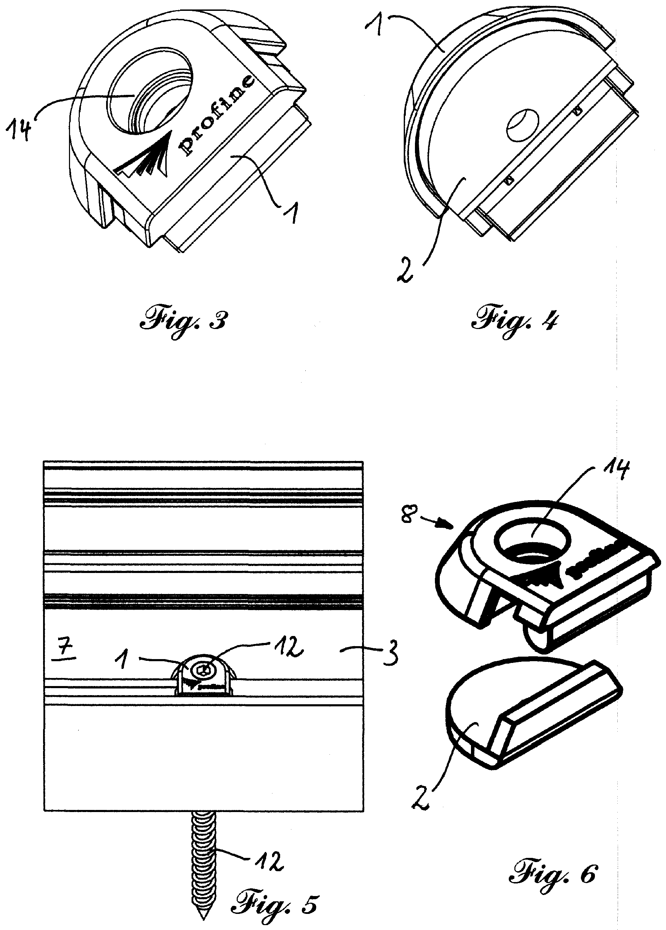

Der in Fig. 2 in der Seitenansicht und in den Fig. 3 und 4 in einer Ansicht von oben bzw. unten dargestellte erfindungsgemäße Dübelkammeradapter 1 besteht im Wesentlichen aus dem Grundkörper 8 und einem vom Grundkörper 8 beabstandet angeordneten Zapfen 9, wobei der Zapfen 9 an der Oberseite des Dübelkammeradapters 1 über - im Querschnitt betrachtet - einen schmalen Steg mit dem Grundkörper 8 verbunden ist. Der dargestellte Dübelkammeradapter 1 wurde im Druckgussverfahren aus einer Zink-Legierung hergestellt.

An der Unterseite des Dübelkammeradapters 1 ist ein Dichtkissen 2 aus wasserdichtem, geschlossenzelligem Moosgummi aufgeklebt (siehe auch Fig. 6). Soweit der Grundkörper 8 aus Kunststoff besteht, kann alternativ als Mittel zur Abdichtung des Grundkörpers 8 gegenüber dem Blendrahmenprofil 3 auch eine einstückig mit dem Grundkörper 8 verbundene Dichtung aus weichelastischem Material verwendet werden.

Wie in Fig. 1 im Querschnitt durch das Blendrahmenprofil 3 dargestellt, wird der Dübelkammeradapter 1 mit dem Zapfen 9 in die Glasleistenaufnahmenut 10 eingeklipst, wobei der Klemmnocken 13 für eine sichere Verklemmung oder Verklipsung in der Glasleistenaufnahmenut 10 sorgt. Bei dem in Fig. 1 dargestellten Blendrahmenprofil 4 handelt es sich um ein Hohlkammerprofil, das wahlweise für ein Mitteldichtungs- oder Anschlagdichtungssystem eingesetzt werden kann. Beim Einsatz als Anschlagdichtungssystem wird die Mitteldichtungs-Aufnahmenut im Blendrahmenfalzbereich durch einen Keder abgedeckt. Zur Aufnahme einer Stahlverstärkung - in Fig. 1 nicht dargestellt - dient die Hohlkammer 11.

In Fig. 1 ist gut zu erkennen, dass der Falzbereich 7 des Blendrahmens 4 ausgehend von der Glasleistenaufnahmenut 10 in einem weiten Bereich eben und horizontal, also senkrecht zur Innenseite 4 verläuft. Bei derartigen Blendrahmen-Konstruktionen ist die Gefahr, dass Schlagregen in den Falzbereich 7 bis an die Glasleistenaufnahmenut 10 gelangt, besonders hoch. Zudem weist das Blendrahmenprofil 3 keine separate Dübelkammer auf, so dass die Verschraubung 12 durch die als Stahlkammer fungierende Hohlkammer 11 geführt wird.

Zur Verankerung eines Blendrahmens im Mauerwerk wird zunächst wie beschrieben der Dübelkammeradapter 1 am Blendrahmenprofil 3 verklipst. Anschließend wird unter Verwendung des Dübelkammeradapters 1 als Bohrlehre eine Bohrung durch die Hohlkammer 11 des Blendrahmenprofils 3 bis in das Mauerwerk (in den Fig. nicht dargestellt) gebohrt. Schließlich wird eine handelsübliche Schraube 12 durch den Dübelkammeradapter 1 und die Hohlkammer 11 des Blendrahmenprofils 3 bis in das Mauerwerk geschraubt, wobei zum einen der Schraubenkopf der Schraube 12 in dem Dübelkammeradapter 1 versenkt und das Dichtkissen 2 so gegen den Falzbereich 7 des Blendrahmens 3 sowie die Innenseite der Glasleistenaufnahmenut 10 verpresst wird, dass eine allseits hermetische Abdichtung des Falzbereichs 7 gegenüber der Hohlkammer 11 gewährleistet ist (Fig. 5).

### Legende

- 1: Dübelkammeradapter
- 2: Dichtkissen
- 3: Blendrahmenprofil
- 4: Innenseite
- 5: Außenseite
- 6: Blendrahmenüberschlag
- 7: Falzbereich
- 8: Grundkörper
- 9: Zapfen
- 10: Glasleistenaufnahmenut
- 11: Hohlkammer
- 12: Schraube
- 13: Klemmnocken
- 14: Bohrung

## Patentansprüche

1. Verfahren zur Befestigung eines Blendrahmens in einer Maueröffnung unter Verwendung eines Dübelkammeradapters (1), wobei der Dübelkammeradapters (1)
- einen Grundkörper (8) mit einer Unterseite, einer Oberseite und einer den Grundkörper (8) durchdringenden Bohrung (14),
- einen vom Grundkörper (8) beabstandet angeordneten Zapfen (9) und
- ein an der Unterseite des Grundkörpers angeordnetes Mittel zur Abdichtung des Dübelkammeradapters (1) gegenüber dem Blendrahmenprofil (3) aufweist, **gekennzeichnet durch** folgende Verfahrensschritte:
- der Dübelkammeradapter (1) wird **durch** klemmendes oder rastendes Einführen des Zapfens (9) in die Glasleistenaufnahmenut (10) im Falzbereich (7) des Blendrahmenprofils (3) befestigt;
- eine Schraube (12) wird **durch** den Dübelkammeradapter und das Blendrahmenprofil (3) in die Wandung der Maueröffnung gedreht, wobei der Kopf der Schraube (12) im Dübelkammeradapter (1) versenkt und das Mittel zur Abdichtung des Dübelkammeradapters (1) gegenüber dem Blendrahmenprofil (3) unter Abdichtung des Dübelkammeradapters (1) gegenüber dem Blendrahmenprofil (3) verpresst wird.

2. Verfahren nach Anspruch 1, **dadurch gekennzeichnet, dass** das an der Unterseite des Grundkörpers (8) angeordnete Mittel zur Abdichtung des Dübelkammeradapters (1) gegenüber dem Blendrahmenprofil (3) aus einem Dichtkissen (2) aus Schaumstoff besteht.

3. Verfahren nach Anspruch 1, **dadurch gekennzeichnet, dass** das an der Unterseite des Grundkörpers (8) angeordnete Mittel zur Abdichtung des Dübelkammeradapters (1) gegenüber dem Blendrahmenprofil (3) aus einem durch Zweikomponenten-Spritzgießen einstückig mit dem Grundkörper verbundenen weichelastischen Kunststoff besteht.

4. Verfahren nach einem der Ansprüche 1 bis 3, **gekennzeichnet durch** die Verwendung eines Blendrahmenprofils (3) mit einem Falzbereich (7), einer Außenseite (5), einer Innenseite (4) und einer im Bereich der Innenseite (4) den Falzbereich (7) begrenzenden Glasleistenaufnahmenut (10), wobei der Falzbereich (7) des Blendrahmenprofils (3) einen ebenen, senkrecht zur Innenseite (4) verlaufenden Bereich aufweist, der sich von der Glasleistenaufnahmenut (10) in Richtung zur Außenseite (5) erstreckt.

5. Verfahren nach einem der Ansprüche 1 bis 4, **dadurch gekennzeichnet, dass** vor dem Eindrehen der Schraube (12) unter Verwendung des Dübelkammeradapters (1) als Bohrlehre ein Loch durch das Blendrahmenprofil (3) in die Wandung der Maueröffnung gebohrt wird.

6. Verfahren nach einem der Ansprüche 1 bis 5, **dadurch gekennzeichnet, dass** das Blendrahmenprofil (3) eine eine Stahlverstärkung aufweisende Hohlkammer (11) aufweist und dass die Schraube (12) die Hohlkammer (11) durchdringt.

## Claims

1. Method for fastening a window frame in a masonry opening using a dowel chamber adapter (1), wherein the dowel chamber adapter (1) has
- a basic body (8) having an underside, an upper side and a bore (14), which passes through the basic body (8),
- a stub (9), which is spaced apart from the basic body (8), and
- a means arranged on the underside of the basic body for the purpose of sealing the dowel chamber adapter (1) in relation to the window frame profile (3),
**characterized by** the following method steps:
- the dowel chamber adapter (1) is fastened in the rebate region (7) of the window frame profile (3) by virtue of the stub (9) being introduced with clamping or latching action into the glazing-bar-accommodating groove (10);
- a screw (12) is screwed into the wall of the masonry opening through the dowel chamber adapter and the window frame profile (3), wherein the head of the screw (12) is recessed in the dowel chamber adapter (1) and the means for sealing the dowel chamber adapter (1) in relation to the window frame profile (3) is subjected to pressing action, with the dowel chamber adapter (1) being sealed in relation to the outer-frame profile (3) in the process.

2. Method according to Claim 1, **characterized in that** the means arranged on the underside of the basic body (8) for the purpose of sealing the dowel chamber adapter (1) in relation to the window frame profile (3) consists of a sealing pad (2) made of foam.

3. Method according to Claim 1, **characterized in that** means arranged on the underside of the basic body (8) for the purpose of sealing the dowel chamber adapter (1) in relation to the window frame profile (3) consists of a soft/resilient plastics material which is connected to the basic body in one piece by two-component injection moulding.

4. Method according to one of Claims 1 to 3, **characterized by** the use of a window frame profile (3) having a rebate region (7), an outer side (5), an inner side (4) and a glazing-bar-accommodating groove (10) which bounds the rebate region (7) in the region of the inner side (4), wherein the rebate region (7) of the window frame profile (3) has a planar region which runs perpendicularly to the inner side (4) and extends from the glazing-bar-accommodating groove (10) in the direction of the outer side (5).

5. Method according to one of the Claims 1 to 4, **characterized in that**, prior to the screw (12) being screwed in, the dowel chamber adapter (1) is used as a drilling jig in order to drill a hole into the wall of the masonry opening through the window frame profile (3).

6. Method according to one of Claims 1 to 5, **characterized in that** the window frame profile (3) has a hollow chamber (11) with steel reinforcement, and **in that** the screw (12) passes through the hollow chamber (11).

## Revendications

1. Procédé pour la fixation d'un châssis dormant dans une ouverture de mur en utilisant un adaptateur de chambre de cheville (1), l'adaptateur de chambre de cheville (1) présentant
- un corps de base (8) avec un côté inférieur, un côté supérieur et un alésage (14) traversant le corps de base (8),
- un tourillon (9) disposé à distance du corps de base (8) et
- un moyen disposé au niveau du côté inférieur du corps de base pour étanchéifier l'adaptateur de chambre de cheville (1) vis-à-vis du profilé de châssis dormant (3),
**caractérisé par** les étapes de procédé suivantes :
- l'adaptateur de chambre de cheville (1) est fixé par introduction par serrage ou par encliquetage du tourillon (9) dans la rainure de réception de parclose (10) dans la région de feuillure (7) du profilé de châssis dormant (3) ;
- une vis (12) est vissée à travers l'adaptateur de chambre de cheville et le profilé de châssis dormant (3) dans la paroi de l'ouverture de mur, la tête de vis (12) étant renfoncée dans l'adaptateur de chambre de cheville (1) et le moyen pour étanchéifier l'adaptateur de chambre de cheville (1) étant pressé par rapport au profilé de châssis dormant (3) tout en étanchéifiant l'adaptateur de chambre de cheville (1) par rapport au profilé de châssis dormant (3).

2. Procédé selon la revendication 1, **caractérisé en ce que** le moyen disposé au niveau du côté inférieur du corps de base (8) pour étanchéifier l'adaptateur de chambre de cheville (1) par rapport au profilé de châssis dormant (3) se compose d'un coussin d'étanchéité (2) en mousse.

3. Procédé selon la revendication 1, **caractérisé en ce que** le moyen disposé niveau du côté inférieur du corps de base (8) pour étanchéifier l'adaptateur de chambre de cheville (1) par rapport au profilé de châssis dormant (3) se compose d'un plastique élastique souple connecté d'une seule pièce au corps de base par moulage par injection à deux composants.

4. Procédé selon l'une quelconque des revendications 1 à 3, **caractérisé par** l'utilisation d'un profilé de châssis dormant (3) avec une région de feuillure (7), un côté extérieur (5), un côté intérieur (4) et une rainure de réception de parclose (10) limitant la région de feuillure (7) dans la région du côté intérieur (4), la région de feuillure (7) du profilé de châssis dormant (3) présentant une région plane s'étendant perpendiculairement au côté intérieur (4), qui s'étend depuis la rainure de réception de parclose (10) dans la direction du côté extérieur (5).

5. Procédé selon l'une quelconque des revendications 1 à 4, **caractérisé en ce qu'**avant le vissage de la vis (12), en utilisant l'adaptateur de chambre de cheville (1) en tant que gabarit de perçage, un trou est percé à travers le profilé de châssis dormant (3) dans la paroi de l'ouverture du mur.

6. Procédé selon l'une quelconque des revendications 1 à 5, **caractérisé en ce que** le profilé de châssis dormant (3) présente une cavité (11) présentant un renforcement en acier et **en ce que** la vis (12) traverse la cavité (11).
